# FASCICULE DE BREVET EUROPEEN

(11) **EP 1 036 727 B1**
(45) Date de publication et mention de la délivrance du brevet: **04.06.2003**
(21) Numéro de dépôt: 00400659.9
(22) Date de dépôt: 10.03.2000
(51) Int. Cl.: B62D 6/00

(54) **Procédé et système de compensation de la variation de rappel volant et de l'amortissement de la vitesse volant**
Verfahren und Vorrichtung zur Kompensation der Veränderung des Lenkradrückstellmoments und der Lenkradgeschwindigkeitsdämpfung
Process and system for compensating the variation of the steering wheel return torque and the damping of the steering wheel speed

(30) Priorité: 18.03.1999 FR 9903395
(43) Date de publication de la demande: 20.09.2000
(73) Titulaire: Renault s.a.s., 92100 Boulogne Billancourt (FR)
(72) Inventeur: Bello, Jean-Luc, 27940 Aubevoye (FR); Coffin, Florent, 27600 Gaillon (FR); Coutant, Patrick, 27600 St Aubin/Gaillon (FR)

(56) Documents cités:
- EP-A- 0 398 238
- PATENT ABSTRACTS OF JAPAN vol. 1995, no. 02, 31 mars 1995 (1995-03-31) -& JP 06 312666 A (SUZUKI MOTOR CORP), 8 novembre 1994 (1994-11-08)

## Description

La présente invention concerne un système embarqué temps-réel de compensation de la variation de rappel volant et de l'amortissement de la vitesse volant d'un véhicule due aux accélérations longitudinales.

Sur les véhicules, après un virage fort, par exemple de type "coin de rue" en ville, le volant revient à sa position d'origine différemment selon que l'on accélère, que l'on freine ou que l'on reste à vitesse stabilisée.

Cette variation du comportement de la direction peut être perturbante. C'est notamment le cas lorsque les directions sont frottantes, car sur un même véhicule, on peut passer d'une situation où le conducteur doit freiner le volant à une situation où il doit au contraire l'accompagner en exerçant un couple moteur.

Plus précisément, pendant les phases d'accélération ou de freinage, le comportement du véhicule subit plusieurs variations influençant le moment de rappel des roues en ligne droite :
- variation des angles de train (notamment la chasse mécanique) engendrée par le déplacement de la roue par rapport à la caisse.
- variation de la chasse pneumatique due aux efforts longitudinaux subits par les pneus.
- variation de la masse sur le train avant due au report de charge.
- etc.

Ces paramètres ne varient pas tous dans le même sens et ainsi peuvent en partie se compenser. Cependant, cette compensation n'est jamais parfaite. Le moment de rappel des roues et donc le comportement du véhicule sont en général très différents entre le freinage et l'accélération.

Les documents EP 398 238 et EP 800 980 proposent une solution de contrôle de l'assistance de direction en fonction du couple conducteur, la vitesse véhicule et la vitesse volant avec une assistance par un moteur électrique. Contrairement à une assistance variable classique (prise en compte du couple conducteur et de la vitesse du véhicule), la prise en compte de la vitesse angulaire du volant permet de modifier le retour volant (notamment freinage du moteur électrique pour réduire l'assistance en cas de forte vitesse véhicule et vitesse angulaire volant) dans différentes situations de conduites. Cet amortissement est destiné à éviter le "pendulage", c'est-à-dire une oscillation du véhicule par rapport à son axe de déplacement longitudinal.

Les documents EP 791 522 et US 566 8722 traitent plus particulièrement du retour à zéro du volant dans la "zone morte" (zone aux alentours du zéro volant où le conducteur exerce de faibles couples pour maintenir le cap). Dans cette zone, la vitesse du volant est prise en compte dans le calcul de l'assistance à fournir au conducteur en vue d'améliorer la stabilité du véhicule (limiter le flou de direction) par un rappel actif de direction.

Actuellement, la variation de l'amortissement de la direction est à son maximum à partir d'environ 80 km/h, car elle est utilisée pour amortir le phénomène de pendulage que l'on rencontre lors d'une excitation rapide du volant à vitesse "élevée". En-deçà, l'amortissement est plus faible. Ainsi, lors d'une manoeuvre "coin de rue" par exemple, à vitesse moyenne, le couple d'amortissement n'est pas satisfaisant.

La présente invention a pour objet d'améliorer le rappel du volant et de le rendre constant quel que soit le type de conduite du véhicule.

Le procédé, selon l'invention, est destiné à la compensation de la variation de rappel du volant et de l'amortissement de la vitesse volant de direction d'un véhicule lors d'accélérations/décélérations. Le volant est pourvu d'une assistance électrique. On détermine une consigne de couple d'assistance en fonction du couple exercé sur le volant par le conducteur du véhicule, de la vitesse longitudinale du véhicule, de l'angle du volant et de l'accélération longitudinale du véhicule obtenue par dérivation de la vitesse du véhicule de façon que le rappel du volant soit indépendant de l'accélération longitudinale du véhicule.

Avantageusement, l'accélération longitudinale du véhicule subit un filtrage passe-bas.

Dans un mode de réalisation de l'invention, on détermine la consigne de couple d'assistance en fonction d'une consigne de rappel de volant en position neutre.

Dans un mode de réalisation de l'invention, on détermine la consigne de couple d'assistance en fonction d'une consigne d'amortissement de la vitesse angulaire du volant.

La présente invention a également pour objet un système de compensation de la variation de rappel du volant de direction et de l'amortissement de la vitesse volant d'un véhicule. Le système comprend une assistance électrique, un capteur du couple exercé sur le volant par le conducteur du véhicule, un capteur de la vitesse longitudinale du véhicule, et un capteur de l'angle du volant. Le système comprend un moyen pour dériver l'accélération longitudinale du véhicule à partir de la vitesse du véhicule détermine, une consigne de couple d'assistance étant élaborée de façon que le rappel du volant soit indépendant de l'accélération longitudinale du véhicule.

Dans un mode de réalisation de l'invention, le système comprend une table de rappel de volant en position neutre en fonction de l'angle du volant et de la vitesse véhicule. Le système peut comprendre une table de rappel de volant en position neutre en fonction de l'accélération longitudinale du véhicule.

Dans un mode de réalisation de l'invention, le système comprend une table d'amortissement de la vitesse angulaire du volant en fonction de la vitesse longitudinale du véhicule et de la vitesse angulaire du volant. Le système peut comprendre une table d'amortissement de la vitesse angulaire du volant en fonction de l'accélération longitudinale du véhicule.

L'invention permet d'améliorer les stratégies de rappel actif du volant et d'amortissement de la vitesse du volant sur les directions à assistance électrique possédant un capteur d'angle du volant. La prise en compte de l'accélération ou du freinage du véhicule permet d'obtenir un rappel du volant constant quelle que soit la situation de conduite.

La présente invention sera mieux comprise et d'autres avantages apparaîtront à la lecture de la description détaillée d'un mode de réalisation pris à titre d'exemple nullement limitatif et illustré par les dessins annexés, sur lesquels :
la figure 1 est un schéma de la direction d'un véhicule;
la figure 2 est une vue montrant les différentes étapes d'élaboration du couple d'assistance; et
la figure 3 est une courbe montrant une loi de variation du couple de rappel et de l'amortissement de la vitesse volant.

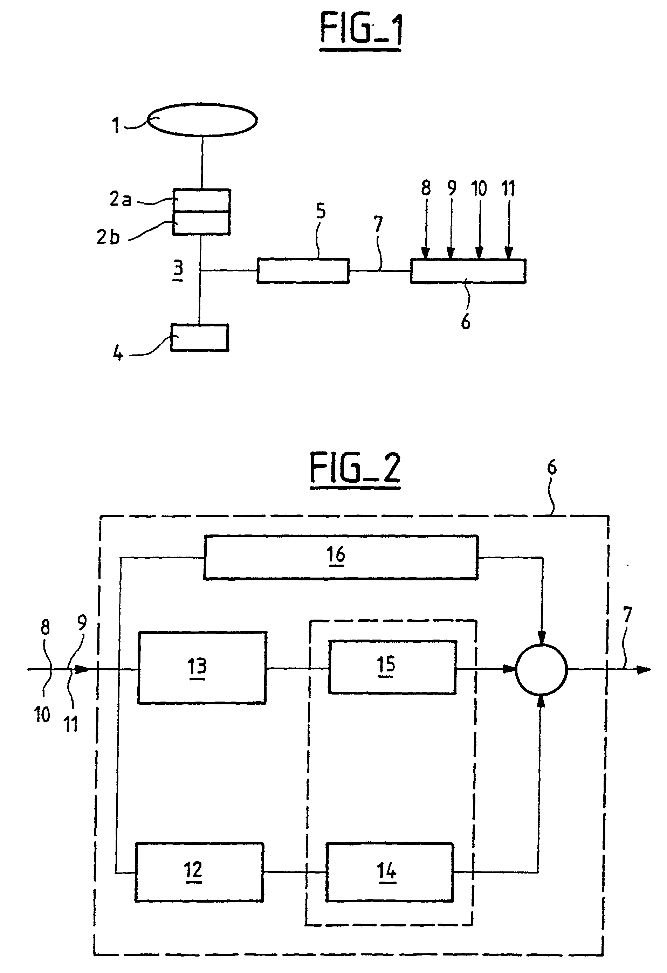

Comme on peut le voir sur la figure 1, le système de direction d'un véhicule comprend un volant 1 dont l'axe est équipé de capteurs, un couplemètre 2a et un capteur d'angle 2b. Le volant 1 est apte à commander l'orientation des roues 4 par l'intermédiaire d'un organe mécanique 3 tel que des engrenages ou un système à recirculation de billes. Un moteur électrique d'assistance 5 est relié à l'organe mécanique 3 et permet d'appliquer un couple dans un sens ou dans l'autre. Le moteur électrique 5 est commandé par un calculateur 6. Le calculateur 6 génère une commande d'assistance 7 qui est reçue par le moteur électrique 5 pour braquer les roues 4 du véhicule, via l'organe mécanique 3. Le calculateur 6 comprend quatre entrées principales référencées 8 à 11 et lui fournissant respectivement les valeurs de couple conducteur, de vitesse longitudinale du véhicule, d'angle du volant et d'accélération longitudinale du véhicule. Le couple conducteur est fourni par le couplemètre 2a et constitue l'information principale permettant de définir des lois d'assistance.

La vitesse longitudinale du véhicule est mesurée par un capteur de vitesse situé dans le véhicule, et non représenté sur le schéma. On peut ainsi faire varier le niveau d'assistance en fonction de la vitesse du véhicule. L'angle du volant est fourni par le capteur d'angle 2b et permet, notamment, d'obtenir un rappel actif du volant en position neutre.

L'accélération longitudinale du véhicule provient d'une dérivation de la vitesse mesurée par le capteur de vitesse et préalablement filtrée par un filtre adéquat, par exemple de type passe-bas, pour avoir un signal vitesse de base suffisamment lisse.

Sur la figure 2, on voit que le calculateur 6 comprend un module 12 de rappel volant, un module 13 d'amortissement de direction, un module 14 de prise en compte de l'accélération longitudinale, d'un module 15 également de prise en compte de l'accélération longitudinale, le module 14 étant relié à la sortie du module 12 et le module 15 étant relié à la sortie du module 13, et un module 16 de lois de commande, les modules 12, 13 et 16 étant disposés en parallèle à partir de l'entrée du calculateur 6 qui reçoit les variables d'entrée, à savoir le couple du volant, la vitesse du véhicule, l'angle du volant et l'accélération du véhicule. Le module 16 élabore la loi principale d'assistance en fonction du couple du volant, c'est-à-dire le couple exercé par le conducteur sur le volant. Le module 13 prend principalement en compte la vitesse du volant (calculée dans le module 13 à partir de l'angle volant) et la vitesse du véhicule. Le module 12 prend principalement en compte l'angle du volant et la vitesse du véhicule. Les consignes émises en sortie des modules 12 et 13 sont corrigées en fonction de l'accélération longitudinale par les modules 14 et 15. La sortie des modules 14, 15 et 16 est reliée à un sommateur pour élaborer la consigne de couple d'assistance 7 qui est envoyée en sortie vers un moteur électrique d'assistance, non représenté.

Pour le rappel actif du volant, si l'accélération longitudinale du véhicule est nulle, on utilise la valeur déterminée par le module 12, sans changement. Si l'accélération est positive, on modifie la valeur déterminée par le module 12 d'une grandeur fonction de l'accélération, par exemple proportionnelle. Si l'accélération est négative (freinage), on modifie la valeur déterminée par le module 12 d'une grandeur fonction de l'accélération, par exemple proportionnelle, avec une fonction différente de la précédente.

Le même principe est utilisable pour le calcul de l'amortissement à partir de la valeur issue du module 13 avec des grandeurs fonction de l'accélération différentes de celles choisies pour le rappel actif. Ainsi, si l'accélération est nulle, le module 15 ne modifie pas la grandeur issue du module 13. Si l'accélération est positive, le module 15 ajoute à la sortie du module 13 une grandeur fonction de l'accélération. Si l'accélération est négative, le module 15 ajoute à la sortie du module 13 une grandeur issue d'une autre fonction de l'accélération.

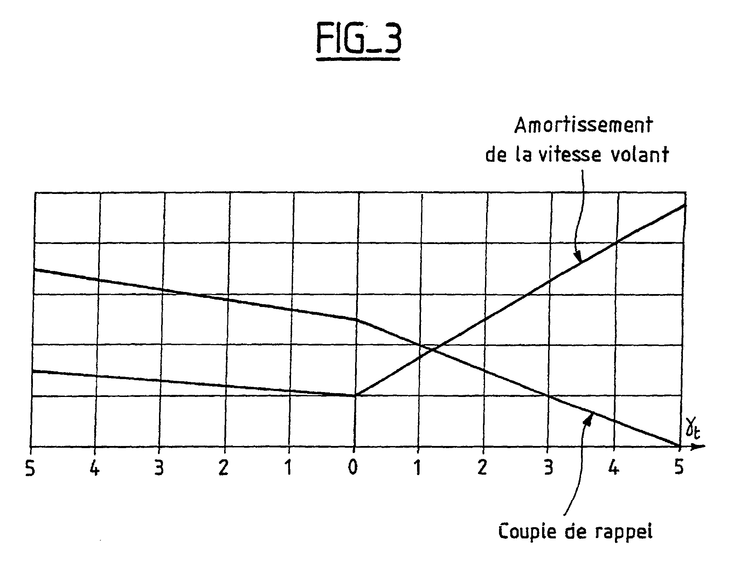

La courbe de la figure 3 montre un exemple de variation en prenant comme fonction d'accélération une fonction proportionnelle, tant pour le rappel actif que pour l'amortissement de direction.

Dans cet exemple, le couple de rappel de volant à accélération nulle est égal à 2,5 mN avec une première pente négative en cas d'accélération et une deuxième pente négative en cas de freinage. Le couple d'amortissement à accélération nulle est égal à 1 mN/360°/s. avec une pente positive en cas d'accélération positive et une pente négative en cas d'accélération négative.

On obtient, grâce à l'invention, un véhicule dont le comportement, tel que le conducteur le ressent, est indépendant de l'accélération longitudinale, ce qui accroit le confort de conduite et la sécurité.

## Revendications

1. Procédé de compensation de la variation de rappel du volant de direction d'un véhicule et de l'amortissement de la vitesse volant, le volant étant pourvu d'une assistance électrique, dans lequel on détermine une consigne de couple d'assistance en fonction du couple exercé sur le volant par le conducteur du véhicule, de la vitesse longitudinale du véhicule, de l'angle du volant et de l'accélération longitudinale du véhicule obtenue par dérivation de la vitesse du véhicule de façon que le rappel du volant soit indépendant de l'accélération longitudinale du véhicule.

2. Procédé selon la revendication 1, dans lequel l'accélération longitudinale du véhicule subit un filtrage passe-bas.

3. Procédé selon la revendication 1 ou 2, dans lequel on détermine la consigne de couple d'assistance en fonction d'une consigne de rappel de volant en position neutre.

4. Procédé selon l'une quelconque des revendications précédentes, dans lequel on détermine la consigne de couple d'assistance en fonction d'une consigne d'amortissement de la vitesse angulaire du volant.

5. Système de compensation de la variation de rappel du volant de direction d'un véhicule et de l'amortissement de la vitesse volant comprenant une assistance électrique, un capteur du couple (2a) exercé sur le volant par le conducteur du véhicule, un capteur de la vitesse longitudinale du véhicule, et un capteur de l'angle (2b) du volant, **caractérisé par le fait qu'**il comprend un moyen pour dériver l'accélération longitudinale du véhicule à partir de la vitesse du véhicule, une consigne de couple d'assistance étant élaborée de façon que le rappel du volant soit indépendant de l'accélération longitudinale du véhicule.

6. Système selon la revendication 5, **caractérisé par le fait qu'**il comprend une table de rappel de volant en position neutre en fonction de l'angle du volant et de la vitesse du véhicule.

7. Système selon la revendication 6, **caractérisé par le fait qu'**il comprend une table de rappel de volant en position neutre en fonction de l'accélération longitudinale du véhicule.

8. Système selon l'une quelconque des revendications 5 à 7, **caractérisé par le fait qu'**il comprend une table d'amortissement de la vitesse angulaire du volant en fonction de la vitesse longitudinale du véhicule et de la vitesse du volant.

9. Système selon la revendication 8, **caractérisé par le fait qu'**il comprend une table d'amortissement de la vitesse angulaire du volant en fonction de l'accélération longitudinale du véhicule.

## Patentansprüche

1. Verfahren zur Kompensation der Variation der Rückstellung eines Lenkrades für ein Kraftfahrzeug sowie der Dämpfung der Geschwindigkeit des Lenkrades, wobei das Lenkrad mit einer elektrischen Lenkhilfe versehen ist, in der ein Sollwert für das Moment der Lenkhilfe erstellt wird als Funktion des vom Fahrer auf das Lenkrad ausgeübten Moments, der Geschwindigkeit des Fahrzeugs in Längsrichtung, des Winkels des Lenkrades, und der Beschleunigung des Fahrzeuges in Längsrichtung, die durch Ableitung aus der Geschwindigkeit des Fahrzeuges erhalten wird, sodass die Rückstellung des Lenkrades unabhängig von der Beschleunigung des Fahrzeuges in Längsrichtung erfolgt.

2. Verfahren nach Anspruch 1, bei dem die Beschleunigung des Fahrzeuges in Längsrichtung einer Tiefpass-Filterung unterworfen wird.

3. Verfahren nach Anspruch 1 oder 2, bei dem der Sollwert für das Moment der Lenkhilfe als Funktion eines Sollwertes für die Rückstellung des Lenkrades in die Neutralstellung erstellt wird.

4. Verfahren nach einem der vorhergehenden Ansprüche, bei dem der Sollwert für das Moment der Lenkhilfe als Funktion eines Sollwertes für die Dämpfung der Winkelgeschwindigkeit des Lenkrades erstellt wird.

5. System zur Kompensation der Variation der Rückstellung eines Lenkrades für ein Kraftfahrzeug sowie der Dämpfung der Geschwindigkeit des Lenkrades, mit einer elektrischen Lenkhilfe, einem Fühler (2a) für das vom Fahrer des Fahrzeuges auf das Lenkrad ausgeübte Moment, einem Fühler für die Geschwindigkeit des Fahrzeuges in Längsrichtung und einem Fühler (2b) für den Winkel des Lenkrades, **dadurch gekennzeichnet, dass** es eine Anordnung zur Ableitung der Beschleunigung des Fahrzeuges in Längsrichtung aus der Geschwindigkeit des Fahrzeuges aufweist, wobei ein Sollwert für das Moment der Lenkhilfe erstellt wird, sodass die Rückstellung des Lenkrades unabhängig von der Beschleunigung des Fahrzeuges in Längsrichtung ist.

6. System nach Anspruch 5, **dadurch gekennzeichnet, dass** es eine Tabelle für die Rückstellung des Lenkrades in die Neutralstellung als Funktion des Winkels des Lenkrades und der Geschwindigkeit des Fahrzeugs aufweist.

7. System nach Anspruch 6, **dadurch gekennzeichnet, dass** es eine Tabelle für die Rückstellung des Lenkrades in die Neutralstellung als Funktion der Beschleunigung des Fahrzeuges in Längsrichtung aufweist.

8. System nach einem der Ansprüche 5 bis 7, **dadurch gekennzeichnet, dass** es eine Tabelle für die Dämpfung der Winkelgeschwindigkeit des Lenkrades als Funktion der Geschwindigkeit des Fahrzeuges in Längsrichtung und der Geschwindigkeit des Lenkrades aufweist.

9. System nach Anspruch 8, **dadurch gekennzeichnet, dass** es eine Tabelle für die Dämpfung der Winkelgeschwindigkeit des Lenkrades als Funktion der Beschleunigung des Fahrzeuges in Längsrichtung aufweist.

## Claims

1. Process for compensating for the variation in the return-to-centre of the steering wheel of a vehicle and for damping the steering wheel speed, the steering wheel being equipped with electric power steering, in which an assist torque command is determined depending on the torque exerted on the steering wheel by the driver of the vehicle, the longitudinal speed of the vehicle, the steering-wheel angle and the longitudinal acceleration of the vehicle obtained by derivation of the speed of the vehicle in such a way that the steering wheel return-to-centre is independent of the longitudinal acceleration of the vehicle.

2. Process according to claim 1, in which the longitudinal acceleration of the vehicle undergoes low-pass filtering.

3. Process according to claim 1 or 2, in which the assist torque command is determined according to a steering wheel return-to-centre command.

4. Process according to any one of the previous claims, in which the assist torque command is determined as a function of a steering wheel angular speed damping command.

5. System for compensating for the variation in the return-to-centre of the steering wheel of a vehicle and for damping the steering wheel speed comprising electric power steering, a sensor (2a) to detect the torque exerted on the steering wheel by the driver of the vehicle, a sensor to detect the longitudinal speed of the vehicle and a steering-wheel angle sensor (2b), **characterised in that** it comprises a means of deriving the longitudinal acceleration of the vehicle from the speed of the vehicle, an assist torque command being determined in such a way that the steering wheel return-to-centre is independent of the longitudinal acceleration of the vehicle.

6. System according to claim 5, **characterised in that** it comprises a steering wheel return-to-centre rack depending on the steering wheel angle and the speed of the vehicle.

7. System according to claim 6, **characterised in that** it comprises a steering wheel return-to-centre rack depending on the longitudinal acceleration of the vehicle.

8. System according to any one of claims 5 to 7, **characterised in that** it comprises a steering wheel angular speed damping rack depending on the longitudinal speed of the vehicle and the speed of the steering wheel.

9. System according to claim 8, **characterised in that** it comprises a steering wheel angular speed damping rack depending on the longitudinal acceleration of the vehicle.
